# EUROPEAN PATENT APPLICATION

(11) **EP 2 244 416 A1**
(43) Date of publication of application: **27.10.2010**
(21) Application number: 09710833.6
(22) Date of filing: 28.01.2009
(51) Int. Cl.: H04L 9/36, H04L 12/22

(54) **ENCRYPTION PROCESSING METHOD AND ENCRYPTION PROCESSING DEVICE**

(30) Priority: 13.02.2008 JP 2008032228
(71) Applicant: Panasonic Corporation, Kadoma-shi Osaka 571-8501 (JP)
(72) Inventor: YAMADA, Kazushige, Osaka 540-6207 (JP); SENGA, Satoshi, Osaka 540-6207 (JP); LIU, Hsueh-Teng, Taipei City 105 (TW); FANG,Chun-Wei, Taipei City 112 (TW)
(74) Representative: Grünecker, Kinkeldey, Stockmair & Schwanhäusser Anwaltssozietät
(86) International application number: PCT/JP2009/000330
(87) International publication number: WO 2009/101768

(57) **Abstract**

Provided is an encryption processing device which can effectively improve an encryption processing performance of a secure multi-media communication. The encryption processing device (100) includes: storage means (162) which stores secure processing information containing an identification condition for identifying a packet requiring an encryption/decryption process or an authentication process; transmission means (112) which transmits a multi-media packet in a plain text to a virtual network interface (140); correction means (160) which executes an encryption process or an authentication process on the multi-media packet if the multi-mediapacket coincides with the identification condition and corrects the payload of the secure multi-media packet so as to be matched with a security protocol; and replacement means (130) which transfers the secure multi-media packet transmitted to the virtual network interface (140) to an inherent network interface (150).

## Description

### Technical Field

The present invention relates to a encrypt processing method and encrypt processing apparatus for improving security of the application layer.

### Background Art

Patent Document 1 proposes a method of improving processing performance associated with an application layer security protocol. Patent document 1 discloses that an encryption accelerator removes encrypt processing load from CPU to improve processing performance. However, with the method disclosed in Patent Document 1, two rounds of memory copy operations are performed between the user space and the kernel space each time a message is inputted or outputted, and therefore severe overhead is caused.

To cope with the memory copy overhead between the user space and the kernel space in an application layer security protocol, the following invention is proposed (Patent Document 2).

Patent Document 2 proposes a method of reducing memory copy overhead by making the network protocol offload chip configured with both an encryption accelerator and a network protocol stack processor bear both loads of encrypt processing and network protocol stack processing. However, to realize this method, a specific network hardware architecture is needed, and therefore the method is not suitable for a software-based TCP/IP stack installed in an apparatus.
- Patent Document 1:: U.S. Patent No.7,047,405
- Patent Document 2:: U.S. Patent No.6,983,382

### Disclosure of Invention

### Problems to be Solved by the Invention

A problem arises with Patent Document 1 that, when the application layer security protocol is executed, each time a message is inputted or outputted, each multimedia payload is copied to memory a plurality of times between the user space and the kernel space, resulting in poor encrypt processing performance. Here, payload refers to data per se in a data block, not including a header and so on. When a large-sized payload such as audio and video is processed, encrypt processing performance becomes poorer.

With Patent Document 2, even if memory copy overhead can be reduced, in cases where the segmented portions of the large-sized payload are continuously processed, there is no information related to encryption for associating two continuous segments. Therefore, when the application layer secure protocol is applied, there is difficulty of having to perform encrypting and authenticating for the segments separately in a CBC (Encrypt Block Chaining) mode or counter mode.

The present invention is made in view of the above-described problems, and it is therefore an object of the present invention to provide a encrypt processing method and a encrypt processing apparatus that improve encrypt and decrypting processing performance or authentication processing performance effectively over secure multimedia communication.

### Means for Solving the Problem

According to an aspect of the present invention, the encrypt processing method for improving encrypt and decrypting processing or authentication processing for multimedia communication secured by a security protocol includes: upon starting the multimedia communication, storing secure processing information including an identification condition for identifying a packet required in the encrypt and decrypting processing or the authentication processing; transmitting a plaintext multimedia packet to a virtual network interface; filtering the plaintext multimedia packet in a network protocol stack, based on the identification condition included in the secure processing information; in a case where the plaintext multimedia packet is filtered, when the plaintext multimedia packet matches the identification condition included in the secure processing information, executing encrypt processing or authentication processing for the plaintext multimedia packet, and modifying a payload of a secure multimedia packet such that the payload of the secure multimedia packet is complied with the security protocol; transferring the secure multimedia packet to be transmitted to the virtual network interface, to an original network interface; and transmitting the secure multimedia packet from the original network interface.

According to an aspect of the present invention, the encrypt processing apparatus provides a encrypt processing apparatus for improving encrypt and decrypting processing or authentication processing for multimedia communication secured by a security protocol adopts a configuration including: a storing section that stores secure processing information including an identification condition for identifying a packet required in the encrypt and decrypting processing or the authentication processing; a transmitting section that transmits a plaintext multimedia packet to a virtual network interface; a modification section that modifies a payload of a secure multimedia packet such that the payload of the secure multimedia packet complies with a security protocol by deciding whether or not the plaintext multimedia packet matches the identification condition included in the secure processing information and executing encrypt processing or authentication processing for the plaintext multimedia packet when the identification condition is matched; a replacement section that transfers the secure multimedia packet to be transmitted to the virtual network interface, to an original network interface; and a transmitting section that transmits the secure multimedia packet from a network interface.

According to an aspect of the present invention, the encrypt processing method for improving encrypt and decrypting processing or authentication processing for multimedia communication secured by a security protocol, the encrypt processing method includes: upon starting the multimedia communication, storing secure processing information including an identification condition for identifying a packet required in the encrypt and decrypting processing or the authentication processing; filtering a secure multimedia packet inputted in a network protocol stack, based on the identification condition included in the secure processing information; in a case where the secure multimedia packet is filtered, when the secure multimedia packet matches the identification condition included in the secure processing information, executing decrypting processing or authentication processing for the secure multimedia packet and modifying a payload of the secure multimedia packet as a plaintext payload; and transmitting a plaintext multimedia packet to an application layer of the multimedia communication.

According to an aspect of the present invention, the encrypt processing apparatus provides a encrypt processing apparatus for improving encrypt and decrypting processing or authentication processing for multimedia communication secured by a security protocol and adopts a configuration including: a storing section that stores secure processing information including an identification condition for identifying a packet required in the encrypt and decrypting processing or the authentication processing; a modification section for modifying a payload of a secure multimedia packet as a plaintext payload by deciding whether or not the secure multimedia packet inputted matches the identification condition included in the secure processing information and executing encrypt processing or authentication processing for the secure multimedia packet when the identification condition is matched; and a transmitting section that transmits a plaintext multimedia packet to an application layer of the multimedia communication.

### Advantageous Effects of Invention

According to the present invention, it is possible to improve encrypt and decrypting processing performance or authentication processing performance effectively over secure multimedia communication.

### Brief Description of Drawings

FIG.1 is a block diagram of the cryptographic processing communication system according to an embodiment of the present invention;
FIG.2 is a flowchart showing an embodiment of the present invention to execute kernel-level encrypt processing for a secure multimedia packet to be outputted;
FIG.3 is a flowchart showing an embodiment of the present invention to execute kernel level encrypt processing for a secure multimedia packet to be inputted;
FIG.4 is a configuration diagram of a secure multimedia application management section, application layer secure processing information, an application layer security processing unit and a cryptographic processing unit;
FIG.5 is a configuration diagram of a large-sized security multimedia payload according to an embodiment of the present invention;
FIG.6 is a configuration diagram showing the cryptographic processing communication system that processes multimedia packets having varying formats in output processing according to an embodiment of the present invention;
FIG.7 is a configuration diagram showing the cryptographic processing communication system that processes multimedia packets having varying formats in input processing according to an embodiment of the present invention;
FIG.8 shows a sequence flow showing an embodiment of the present invention for executing kernel level encrypt processing for a secure multimedia packet to be outputted; and
FIG.9 shows a sequence flow showing an embodiment of the present invention for executing kernel level encrypt processing for a secure multimedia packet to be inputted.

### Best Mode for Carrying Out the Invention

Now, embodiments of the present invention will be described in detail with reference to the accompanying drawings.

With the present embodiment, an explanation will be given to a configuration for: transferring a large-sized payload to a virtual network apparatus (virtual network interface) setting the maximum transmission unit much larger than the maximum transmission unit that is used upon actual transmission to a network; starting kernel-level encrypt and decrypting processing or authentication processing over the entire large-sized payload once included in a network protocol stack of the virtual network apparatus; and transmitting the secured payload to a network protocol stack of a real network apparatus (network interface).

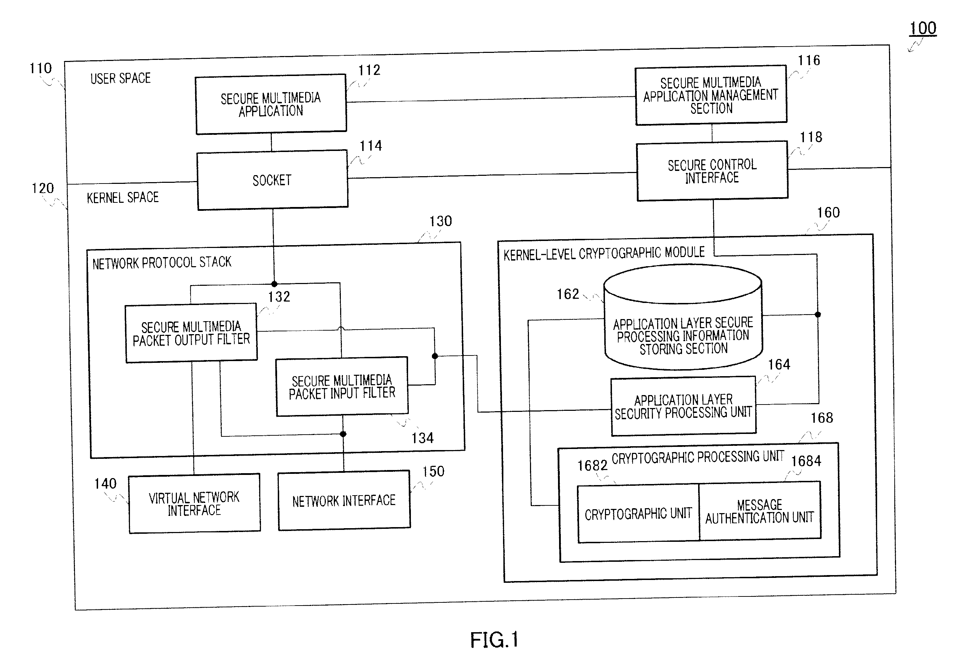

FIG.1 is a block diagram showing an example of the cryptographic processing communication system according to an embodiment of the present invention.

Cryptograhic processing communication system 100 includes user space 110 and kernel space 120.

User space 110 includes secure multimedia application 112, socket 114, secure multimedia application management section 116 and secure control interface 118.

Secure multimedia application 112 is an application for enjoying multimedia content such as audio or video, via the Internet, under protection of an application layer security protocol including a secure real time transport protocol (SRTP).

Multimedia content such as audio or video is packetized in the form of a payload. High-definition multimedia content is a trend, so that a payload generally has a large size.

The payload to carry multimedia content is inputted to socket 114 for network processing.

Secure multimedia application 112 activates secure multimedia communication by starting secure multimedia application management section 116.

Secure multimedia application management section 116 transmits commands including secure multimedia communication start or secure multimedia communication end to secure control interface 118.

Kernel space 120 is configured with network protocol stack 130, virtual network interface 140, network interface 150 and kernel-level cryptographic module 160.

Network protocol stack 130 is configured with secure multimedia packet output filter 132 and secure multimedia packet input filter 134.

TCP/IP stack is an example of network protocol stack 130.

To prevent a large-sized multimedia payload from being divided into segments, a virtual network interface having a relatively large MTU (Maximum Transfer Unit) is set as virtual network interface 140.

Secure multimedia application management section 116 sets and starts secure multimedia packet output filter 132 and secure multimedia packet input filter 134.

When a multimedia packet is filtered by output filter 132 or input filter 134, if the multimedia packet fulfills the identification conditions set in output filter 132 or input filter 134, a payload of the multimedia packet is subjected to encrypt and decrypting processing or authentication processing complying with the application layer security protocol. Here, the identification conditions refer to parameters required in encrypt and decrypting processing or in authentication processing, or conditions for identifying a packet requiring encrypt and decrypting processing or authentication processing.

Kernel-level cryptographic module 160 is configured with application layer secure processing information storing section 162, application layer security processing unit 164 and cryptographic processing unit 168. Cryptographic processing unit 168 includes cryptographic unit 1682 and message authentication unit 1684. Kernel-level cryptographic module 160 executes encrypt processing or authentication processing complying with the application layer security protocol.

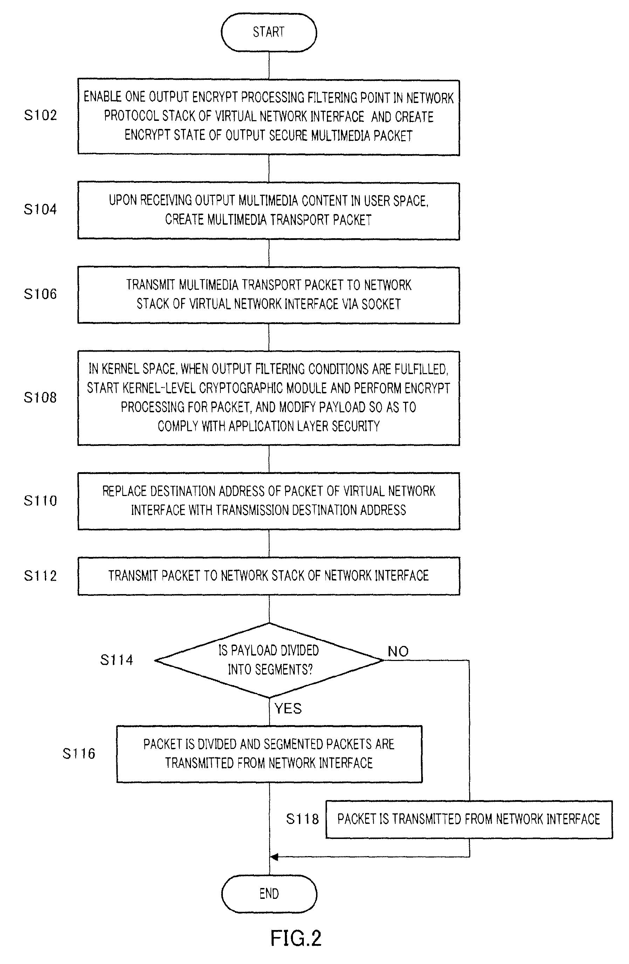

FIG.2 is a flow showing an embodiment of the present invention to execute kernel-level encrypt processing or authentication processing for a secure multimedia packet to be outputted.

In step S102, secure multimedia application 112 starts processing of the secure multimedia application itself, and starts secure multimedia application management section 116 so as to perform setting associated with an secure multimedia packet to be outputted.

By this means, secure multimedia application management section 116 validates one output encrypt processing filtering point (corresponding to output filter 132) in network protocol stack 130 of virtual network interface 140. Management section 116 then creates secure processing information entries in application layer secure processing information storing section 162 (corresponding to a storage means in the present invention) and performs setting of kernel-level cryptographic module 160 including the setting of encrypt processing or authentication processing in application layer security processing unit 164 and cryptographic processing unit 168.

In step S104, when multimedia content to be outputted is created in user space 110, secure multimedia application 112 generates a multimedia transport packet.

In step S106, secure multimedia application 112 transmits the multimedia transport packet to network protocol stack 130 of virtual network interface 140 via socket 114.

In step S108, in kernel space 120, if the multimedia transport packet fulfills the identification conditions in output filter 132, network protocol stack 130 starts kernel-level cryptographic module 160 and makes kernel-level cryptographic module 160 perform encrypt processing or authentication processing for the multimedia transport packet and modify the payload to comply with the application layer security.

Based on the secure processing information entries in application layer secure processing information storing section 162, kernel-level cryptographic module 160 encrypts the multimedia transport packet in cryptographic unit 1682. Message authentication unit 1684 authenticates the message. Then, application layer security processing unit 164 changes the multimedia transport packet, for example, into a payload having an application layer security so as to comply with the part encrypted by SRTP (Secure Real-time Transport Protocol) and the part authenticated by SRTP. That is, the multimedia transport packet is converted to a secure multimedia packet.

In step S110, application layer security processing unit 164 replaces the destination address of the secure multimedia packet addressed to the virtual network interface, with the real transmission destination address.

In step S112, the secure multimedia packet is transmitted to network protocol stack 130 of network interface 150.

In step S114, in network protocol stack 130 of network interface 150, whether or not to divide the secure multimedia packet into segments is decided by checking the payload size with reference to the MTU of network interface 150. If the secure multimedia packet meets the segmentation conditions, the step moves to step S116 and the packet is divided, and a plurality of generated divided packets are transmitted from network interface 150. Otherwise, the step moves to step S118, and the secure multimedia packet is transmitted from network interface 150.

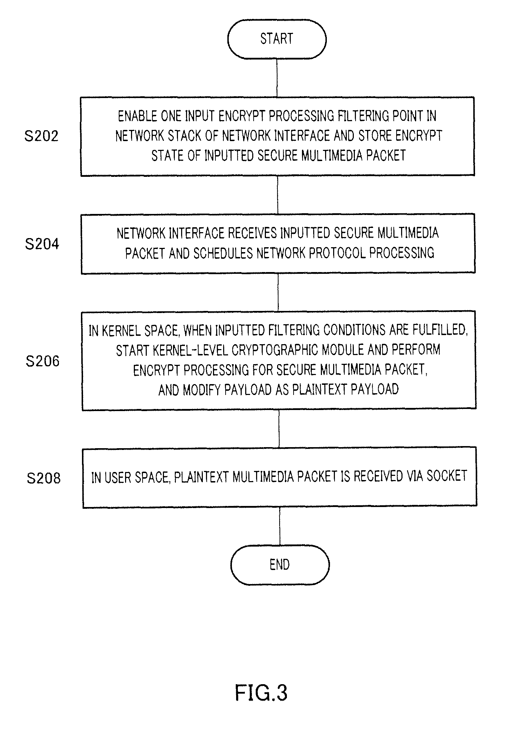

FIG.3 is a flow showing an embodiment of the present invention to execute kernel-level decrypting processing or authentication processing for a secure multimedia packet to be inputted.

In step S202, secure multimedia application 112 starts the secure multimedia application and starts secure multimedia application management section 116 so as to perform setting that associated with a secure multimedia packet to be inputted.

By this means, secure multimedia application management section 116 validates one input encrypt processing filtering point (corresponding to input filter 134) in network protocol stack 130 of network interface 150. Management section 116 then creates secure processing information entries in application layer secure processing information storing section 162 (corresponding to a storage means in the present invention) and performs setting of kernel-level cryptographic module 160 including the setting of decrypting processing or authentication processing in application layer security processing unit 164 and cryptographic processing unit 168.

In step S204, network interface 150 receives a secure multimedia packet as an input, and schedules the packet for the following network protocol processing.

In step S206, in kernel space 120, if the multimedia packet fulfills the identification conditions in input filter 134, network protocol stack 130 starts kernel-level cryptographic module 160 and makes kernel-level cryptographic module 160 perform decrypting processing or authentication processing for the multimedia packet and check that the payload complies with the application layer security.

Based on the secure processing information entries in application layer secure processing information storing section 162, kernel-level cryptographic module 160 decrypts the multimedia packet in cryptographic unit 1682. Message authentication unit 1684 calculates a message authentication value from the secure multimedia packet and checks the reliability of the security packet by matching the calculation result against the message authentication value included in the secure multimedia packet. Exact match of these means that the secure multimedia packet is truly reliable and transmitted authentically by a communicating party. The payload in the secure multimedia packet becomes a plaintext payload.

Here, plaintext refers to data before encryption, or decrypted data without encryption.

In step S 208, network protocol stack 130 transmits a plaintext multimedia packet to secure multimedia application 112 via socket 114. By this means, secure multimedia application 112 receives the plaintext multimedia packet.

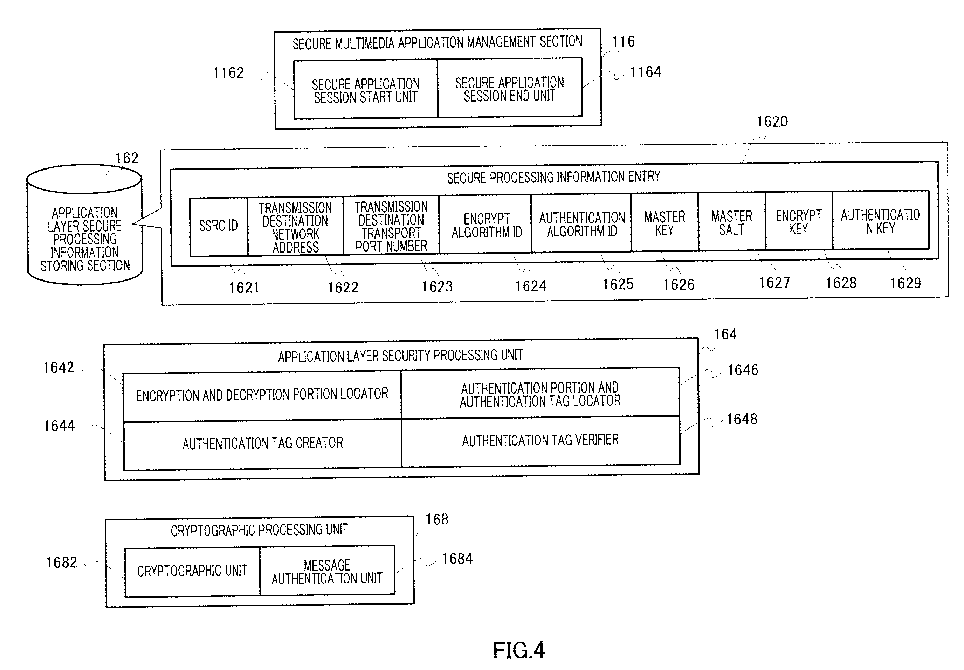

FIG.4 is a configuration diagram of secure multimedia application management section 116, application layer secure processing information, application layer security processing unit 164 and cryptographic processing unit 168.

Secure multimedia application management section 116 includes secure application session start unit 1162 and secure application session end unit 1164.

Upon receiving the output secure multimedia application start from secure multimedia application 112, secure application session start unit 1162 starts secure multimedia packet output filter 132 in network protocol stack 130 of virtual network interface 140, and initializes the entries in application layer secure processing information storing section 162.

With the present embodiment, a local loopback interface is applicable as virtual network interface 140, and the filtering method is a netfilter and the output filtering point (corresponding to output filter 132) is NF_IP_LOCAL_OUT of the netfilter.

Upon receiving the input secure multimedia application start from secure multimedia application 112, secure application session start unit 1162 starts secure multimedia packet input filter 134 in network protocol stack 130 of network interface 150, and initializes the entries in application layer secure processing information storing section 162.

With the present embodiment, an Ethernet (registered trademark) network card is applicable as virtual network interface 140, and the filtering method is a netfilter and input filtering point 134 is NF_IP_LOCAL_IN of the netfilter.

Upon receiving an input secure multimedia application end or output secure multimedia application end from secure multimedia application 112, secure application session end unit 1164 invalidates secure multimedia packet input filter 134 or secure multimedia packet output filter 132 by invalidating the input filter point or output filter point of the netfilter.

Application layer secure processing information storing section 162 stores a plurality of entries of secure processing information. One secure processing information entry 1620 is associated with one of the input secure multimedia application and output multimedia application. Each secure processing information entry in application layer secure processing information storing section 162 contains a plurality of fields for storing information related to encryption required to specify the secure multimedia application and execute encrypt processing.

One secure processing information entry 1620 contains fields of synchronization source (SSRC) identifier 1621, transmission destination network address 1622, transmission destination transport port number 1623, encrypt algorithm identifier 1624, authentication algorithm identifier 1625, master key 1626, master salt 1627, encrypt key 1628 and authentication key 1629.

SSRC identifier 1621, transmission destination network address 1622 and transmission destination transport port number 1623 are used to match the cryptographic context of the secure application.

Encrypt algorithm identifier 1624 is used to identify the encrypt algorithm of the secure application. Supported algorithms include DES (Data Encryption Standard), 3DES, AES (Advanced Encryption Standard), AES 192 and AES256 with CBC or counter modes.

Authentication algorithm identifier 1625 is used to identify authentication algorithm of the secure application. Supported algorithms include, for example, HMAC-SHA1, HMAC-MD5, DES-XCBC-MAC, 3DES-XCBC-MAC and AES-XCBC-MAC.

Master key 1626 and master salt 1627 are used to perform key derivation for generating encrypt key 1628 and authentication key 1629 to use in encrypt processing when encrypt key 1628 and authentication key 1629 are not generated, or are used to perform rekeying for new received master key 1626. Here, "salt" refers to random numbers for making the password complex.

Encrypt key 1628 is used to execute encrypt processing for the secure application including encryption and decryption. Authentication key 1629 is used to execute message authentication or message digest.

Application layer security processing unit 164 executes the application layer security protocol formation including message authentication verification so as to locate the portion where the secure multimedia packet is encrypted and locate the secure multimedia packet authentication portion. Application layer security processing unit 164 includes encryption and decryption portion locator 1642, authentication portion and authentication tag locator 1646, authentication tag creator 1644 and authentication tag verifier 1648.

Encryption and decryption portion locator 1642 is used to locate the start address and end address of the payload in encrypt operation of encryption or decryption. Encrypt processing is executed within this located portion of the payload. When an output RTP (Realtime Transport Protocol) packet is explained as an example, the start address normally matches the first byte following the RTP header. The end address is the last byte of the RTP payload.

Authentication portion and authentication tag locator 1646 is used to locate the start address and the end address of the payload processed in authentication processing or locate the start address for storing or reading the authentication tag. Authentication processing is executed within this located portion. When an output RTP packet is explained as an example, the start address matches the first byte of the RTP header. The end address is the last byte of the RTP payload. When an output RTP packet is explained as an example, the authentication tag start address normally matches the first byte following the last byte of the RTP payload, and normally has a length of 80 bits.

Authentication tag creator 1644 is used to add the authentication tag obtained by computation processing, to the rear end of the payload of the output packet.

Authentication tag verifier 1648 is used to match the authentication tag obtained by computation processing against the authentication tag in the payload of the inputted packet to check whether they match. If these tags do not match, the verification fails and the packet is discarded. However, if they match, it means that the secure multimedia packet is truly reliable and is transmitted authentically by a communicating party.

Cryptographic processing unit 168 includes cryptographic unit 1682 and message authentication unit 1684. Cryptographic unit 1682 supports encryption and decryption of DES, 3DES, AES, AES192 and AES256 with CBC or counter mode.

Message authentication unit 1684 supports message authentication processing of, for example, HMAC-SHA1, HMAC-MD5, DES-XCBC-MAC, 3DES-XCBC-MAC and AES-XCBC-MAC.

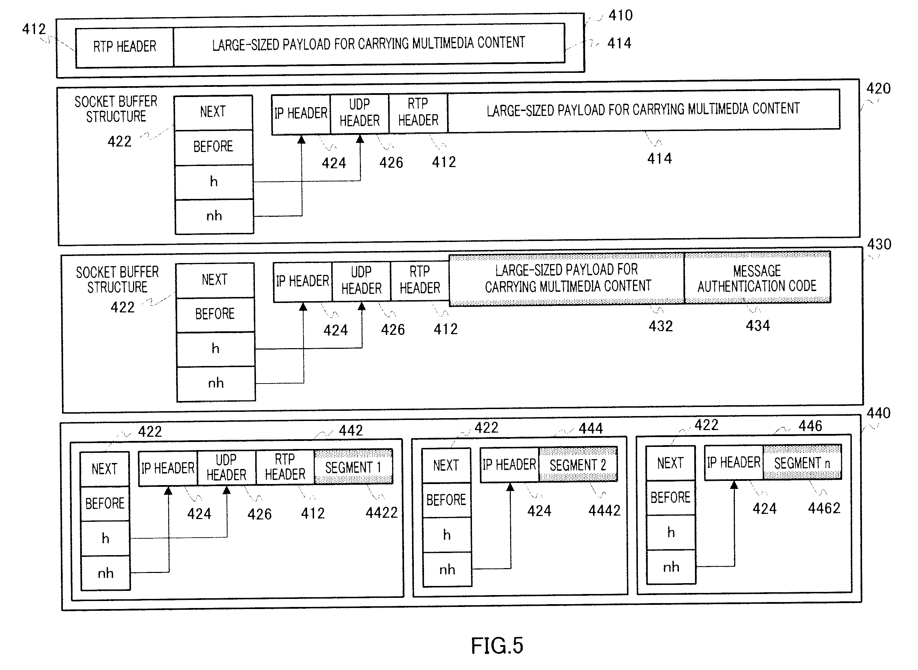

Fig. 5 is a configuration diagram of the large-sized security multimedia payload according to an embodiment of the present invention.

Secure multimedia application 112 uses the RTP (Realtime Transport Protocol) for transmitting multimedia content and generates plaintext multimedia packet 410 containing RTP header 412 and large-sized payload 414.

Network layer plaintext multimedia packet 420 includes socket buffer structure (Sk_buff structure) 422, IP header 424, UDP header 426, RTP header 412 and large-sized payload 414.

After kernel-level encrypt processing complying with the application layer security protocol, network layer plaintext multimedia packet 420 becomes network layer secure multimedia packet 430.

Network layer secure multimedia packet 430 contains socket buffer structure 422, IP header 424, UDP header 426, RTP header 412 and encrypted large-sized payload 432 and message authentication code 434.

Network protocol stack 130 divides large-sized network layer secure multimedia packet 430 into segments according to the MTU of network interface 150.

After network protocol stack 130 divides the network layer secure multimedia packet into segments, network layer secure multimedia packet 430 becomes series of segmented secure multimedia packets 440. Series of segmented secure multimedia packets 440 includes first segmented secure multimedia packet 442, second segmented secure multimedia packet 444 and n-th segmented secure multimedia packet 446.

First segmented secure multimedia packet 442 contains socket buffer structure 422, IP header 424, UDP header 426, RTP header 412 and first segmented encrypted payload 4422. Second segmented secure multimedia packet 444 contains socket buffer structure 422, IP header 424, and second segmented encrypted payload 4442. N-th segmented secure multimedia packet 446 contains socket buffer structure 422, IP header 424, and n-th segmented encrypted payload 4462.

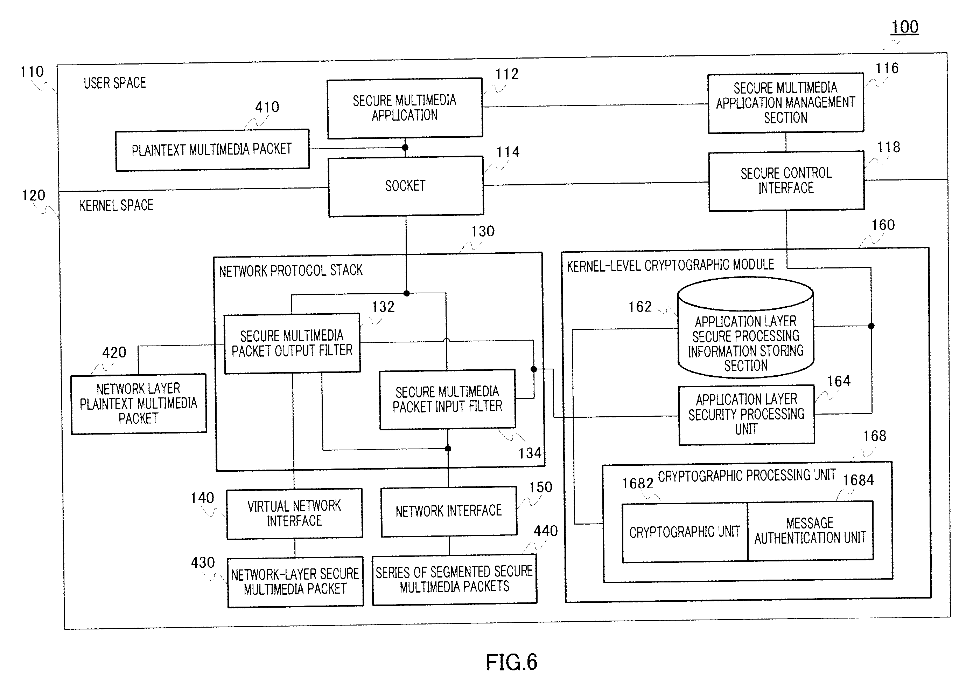

FIG.6 is a configuration diagram showing an example of the cryptographic processing communication system that processes a multimedia packet having varying formats in the output processing according to an embodiment of the present invention.

Secure multimedia application 112 generates plaintext multimedia packet 410 and transmits plaintext multimedia packet 410 to network protocol stack 130 of virtual network interface 140 via socket 114.

Once being inputted to network protocol stack 130, plaintext multimedia packet 410 adopts a network layer packet format and becomes network layer plaintext multimedia packet 420.

Output filter 132 selects network layer plaintext multimedia packet 420, makes kernel level cryptographic module 160 start and execute the application layer security protocol. By this means, network layer plaintext multimedia packet 420 becomes network layer secure multimedia packet 430.

Network layer secure multimedia packet 430 belongs to virtual network interface 140.

After the destination address addressed to virtual network interface 140 of IP header 424 in network layer secure multimedia packet 430 is replaced with the real transmission destination address, network layer secure multimedia packet 430 is transmitted to network protocol stack 130 of network interface 150.

Upon arriving at network protocol stack 130 of network interface 150, network layer secure multimedia packet 430 is divided into segments.

Finally, series of segmented secure multimedia packets 440 is transmitted from network interface 150. That is, first segmented secure multimedia packet 442, second segmented secure multimedia packet 444 and n-th segmented secure multimedia packet 446 are transmitted from network interface 150.

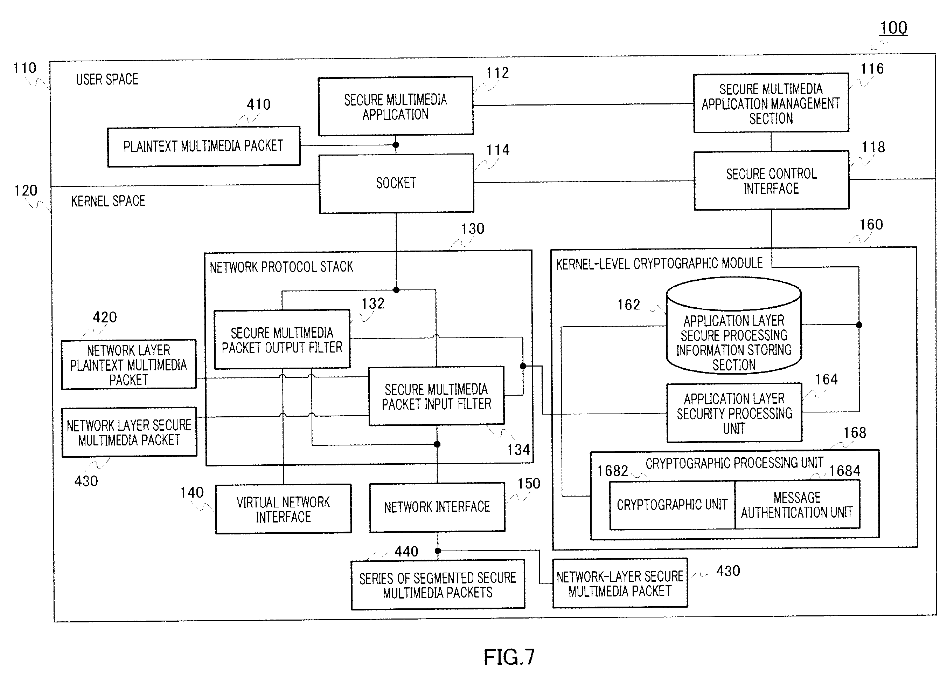

FIG.7 is a configuration diagram showing the cryptographic processing communication system that processes a multimedia packet having varying formats in input processing according to an embodiment of the present invention.

Either series of segmented secure multimedia packets 440 or network layer secure multimedia packet 430 is received by network interface 150.

When the secure multimedia payload is large, series of segmented secure multimedia packets 440 including first segmented secure multimedia packet 442, second segmented secure multimedia packet 444 and n-th segmented secure multimedia packet 446 is received by network interface 150. Otherwise, network layer secure multimedia packet 430 is received by network interface 150.

Once the packet arrives at network protocol stack 130, defragmentation process by the network protocol stack is performed on series of segmented secure multimedia packets 440. Series of segmented secure multimedia packets 440 is reassembled to network layer secure multimedia packet 430.

Input filter 134 selects network layer secure multimedia packet 430, starts kernel level cryptographic module 160 and executes application layer security protocol including decryption and message authentication verification. By this means, network layer multimedia packet 430 becomes network layer plaintext multimedia packet 420.

Network layer plaintext multimedia packet 420 is transmitted to secure multimedia application 112 via socket 114. Finally, secure multimedia application 112 receives plaintext multimedia packet 410.

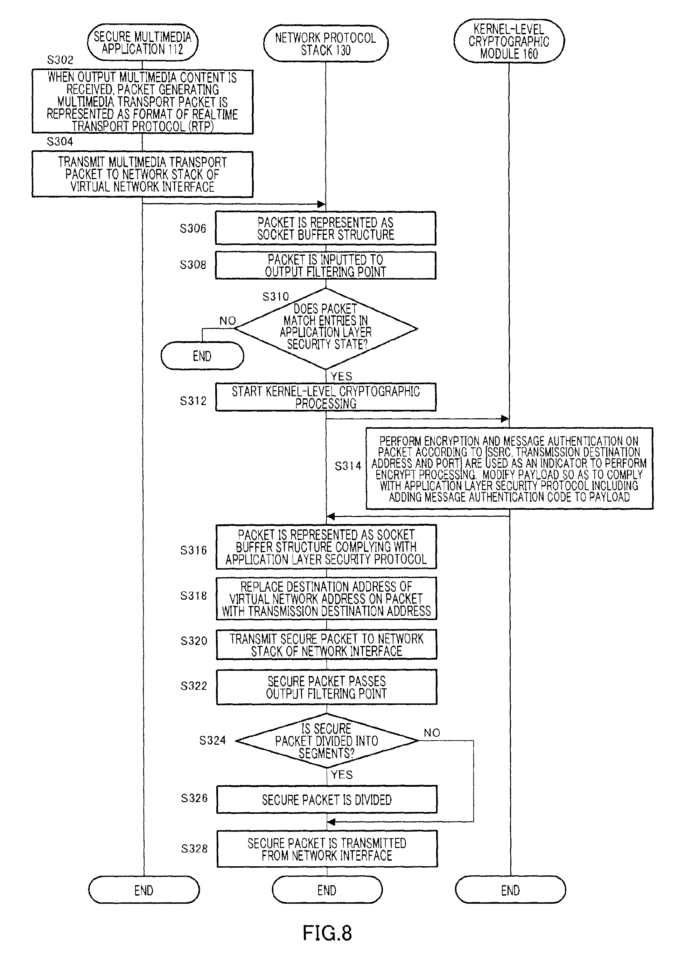

FIG.8 shows a sequence flow showing an embodiment of the present invention to execute kernel level encrypt processing for an outputted secure multimedia packet.

In step S 302, secure multimedia application 112 generates plaintext multimedia packet 410. Plaintext multimedia packet 410 can be represented in a RTP (Realtime Transport Protocol) format.

In step S 304, secure multimedia application 112 transmits plaintext multimedia packet 410 to network protocol stack 130 of virtual network interface 140 via socket 114.

In step S 306, once being inputted to network protocol stack 130, plaintext multimedia packet 410 adopts a network layer packet format and can be represented in socket buffer structure 422, as shown in network layer plaintext packet format 420 in FIG.5.

In step S 308, network layer plaintext packet format 420 is inputted to the output filtering point (corresponding to output filter 132). This filtering point can be NF_IP_LOCAL_OUT of the netfilter.

In step S 310, if three items in RTP header 412 {SSRC ID 1621, transmission destination network address 1622 and transmission destination transport port number 1623} match the filtering conditions, it is decided that network layer plaintext multimedia packet 420 matches the filtering conditions corresponding to secure processing information entries 1620 in application layer secure processing information storing section 162.

If the packet matches the filtering conditions(S 310: "YES"), in step S 312, kernel-level encrypt processing for network layer plaintext multimedia packet 420 is started. Further, if the packet does not match the filtering conditions (S 310: "NO"), the processing is finished.

In step S 314, three items in RTP header 412 {SSRC ID 1621, transmission destination network address 1622 and transmission destination transport port number 1623} are used as an index for executing encrypt processing. If encrypt key 1628 and authentication key 1629 are not generated, or if master-key rekeying is performed for the newly received master key 1626, master key 1626 and master salt 1627 are used to generate encrypt key 1628 and authentication key 1629.

The start address for encryption is determined based on encryption and decryption portion locator 1642, and encrypt algorithm ID 1624 and encrypt key 1628 are used in order to encrypt encryption portion 432.

The start address for message authentication is determined based on authentication portion and authentication tag locator 1646, and authentication is executed for authentication portion 432. Authentication algorithm ID 1625 and authentication key 1629 are used in order to store the result as message authentication tag 434.

After the authentication, authentication tag creator 1644 adds message authentication tag 434 as the authentication result for authentication portion 432 to the packet.

After the encryption and authentication, by making network layer plaintext multimedia packet 420 (payload) comply with the application layer security protocol including the secure realtime transport protocol (SRTP), kernel level cryptographic module 160 modifies network layer plaintext multimedia packet 420 to become network layer secure multimedia packet 430 having encryption portion 432 and message authentication code 434.

In step S 316, by complying with the application layer security protocol including secure realtime transport protocol (SRTP), the packet is in the format of network layer secure multimedia packet 430 having encryption portion 432 and message authentication code 434.

In step S 318, the destination address in IP header 424 in network layer secure multimedia packet 430 on the secure multimedia packet is replaced with the real transmission destination address, and then, in step S 320, network layer secure multimedia packet 430 is transmitted to network protocol stack 130 of network interface 150. By this means, in step S 322, network layer secure multimedia packet 430 passes the output filtering point (corresponding to output filter 132). Network layer secure multimedia packet 430 is inputted to network protocol stack 130 of network interface 150.

In step S 324, whether or not to divide network layer secure multimedia packet 430 into segments, is decided. If network layer secure multimedia packet 430 is larger than the MTU of network interface 150, this decision is "true."

In this case, the step moves to step S 326, and the packet is divided into segments. After the packet is divided into segments, network layer secure multimedia packet 430 becomes series of segmented secure multimedia packets 440. In step S 328, series of segmented secure multimedia packets 440 including first segmented secure multimedia packet 442, second segmented secure multimedia packet 444 and n-th segmented secure multimedia packet 446 is transmitted from network interface 150 to the network.

Meanwhile, if network layer secure multimedia packet 430 is smaller than the MTU of network interface 150, this decision in step S 324 is "false." In this case, the step moves to S 328, network layer secure multimedia packet 430 is transmitted from network interface 150 to the network.

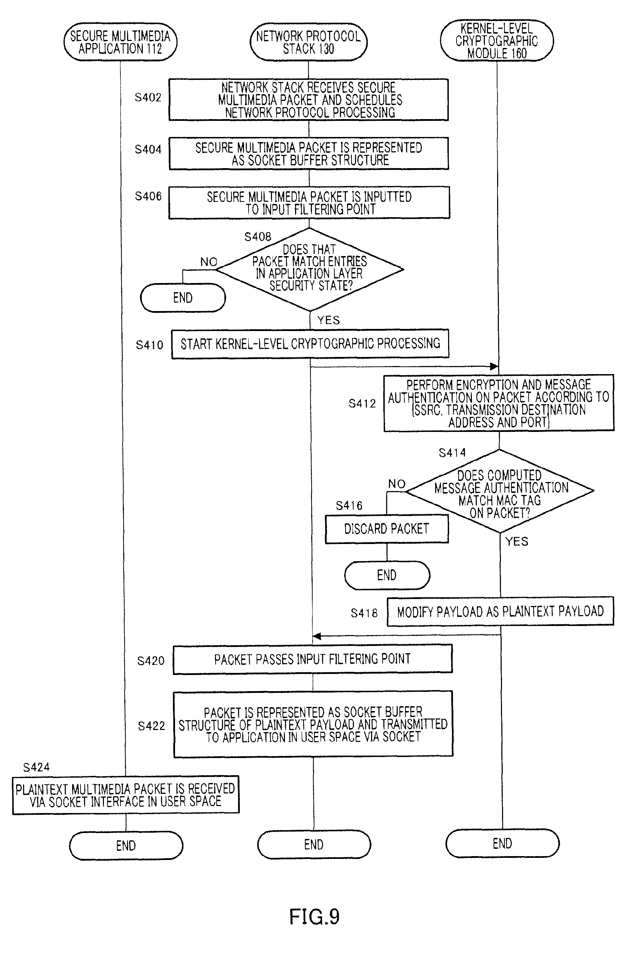

FIG.9 shows a sequence flow showing an embodiment of the present invention to execute kernel-level encrypt processing for an inputted secure multimedia packet.

In step S402, the network interface receives a secure multimedia packet and schedules network protocol processing.

The secure multimedia packet can have either the format of network layer secure multimedia packet 430 or format of series of segmented secure multimedia packets 440 including first segmented secure multimedia packet 442, second segmented secure multimedia packet 444 and n-th segmented secure multimedia packet 446.

In step S404, if the secure multimedia packet has the format of series of segmented secure multimedia packets 440, network protocol stack 130 of network interface 150 reconstitutes series of segmented secure multimedia packets 440 such that series of segmented secure multimedia packets 440 including first segmented secure multimedia packet 442, second segmented secure multimedia packet 444 and n-th segmented secure multimedia packet 446 becomes network layer secure multimedia packet 430.

By the processing in step S404, the secure multimedia packet is network layer secure multimedia packet 430 represented in the format of socket buffer structure 422.

In step S406, network layer secure multimedia packet 430 is inputted to the input filtering point (corresponding to input filter 134). This filtering point can be NF_IP_LOCAL_IN of the netfilter.

In step S408, if three items in RTP header 412 {SSRC ID 1621, transmission destination network address 1622 and transmission destination transport port number 1623} match the filtering conditions, it is decided that network layer secure multimedia packet 430 matches the filtering conditions corresponding to secure processing information entries 1620 in application layer secure processing information storing section 162.

If the packet matches the filtering conditions (S408: "YES"), in step S410, kernel-level encrypt processing for network layer plaintext multimedia packet 420 is started. Further, if the packet does not match the filtering conditions (S408: "NO"), the processing is finished.

In step S412, three items in RTP header 412 {SSRC ID 1621, transmission destination network address 1622 and transmission destination transport port number 1623} are used as an index for executing encrypt processing. If encrypt key 1628 and authentication key 1629 are not generated, or if master-key rekeying is performed for the newly received master key 1626, master key 1626 and master salt 1627 are used to generate encrypt key 1628 and authentication key 1629.

The start address for decryption is determined based on encryption and decryption portion locator 1642, and encrypt algorithm ID 1624 and encrypt key 1628 are used in order to decrypt decryption portion 432.

The start address for message authentication is determined based on authentication portion and authentication tag locator 1646, and, to authenticate authentication portion 432, authentication algorithm ID 1625 and authentication key 1629 are used. This result is referred to as "message authentication subject to computation processing."

In step S414, to check whether or not the message authentication subject to computation processing strictly matches message authentication code 434, authentication tag verifier 1648 is used.

If these strictly match, it means that network layer secure multimedia packet 430 is truly reliable and is transmitted authentically by a communicating party.

If these do not strictly match, it means that network layer secure multimedia packet 430 is a fake, the step moves to step S 416 and network layer secure multimedia packet 430 is discarded.

If these strictly match, the step moves to step S418, and the payload of secure multimedia packet 430 is modified such that network layer secure multimedia packet 430 having decryption portion 432 and message authentication code 434 becomes network layer plaintext multimedia packet 420 complying with the realtime transport protocol (RTP).

In step S420, network layer plaintext multimedia packet 420 passes the input filtering point (corresponding to input filter 134).

In step S422, network layer plaintext multimedia packet 420, which is represented in the format of socket buffer structure 422, is transmitted to secure multimedia application 112 via socket 114.

Finally, in step S424, plaintext multimedia packet 410 is received from socket 114 and the multimedia content is extracted from RTP payload 414.

In this way, according to the present embodiment, by transmitting a large-sized payload to a virtual network interface having a relatively large maximum transmission unit (MTU) to prevent a problem of division into segments, by starting kernel-level encrypt processing over the entire large-sized payload once included in a network protocol stack of the virtual network interface, and by transmitting the secured payload to the network protocol stack of a network interface, it is possible to realize application layer secure protocol processing with the minimum rounds of memory copies while using an already available network protocol stack.

The disclosure of Japanese Patent Application No.2008-32228, filed on February 13, 2008, including the specification, drawings and abstract, is incorporated herein by reference in its entirety.

### Industrial Applicability

The encrypt processing apparatus of the present invention is suitable for use in a encrypt processing apparatus that improves encrypt processing performance of secure multimedia communication effectively.

## Claims

1. A encrypt processing method for improving encrypt and decrypting processing or authentication processing for multimedia communication secured by a security protocol, the encrypt processing method comprising the steps of:
upon starting the multimedia communication, storing secure processing information including an identification condition for identifying a packet required in the encrypt and decrypting processing or the authentication processing;
transmitting a plaintext multimedia packet to a virtual network interface;
filtering the plaintext multimedia packet in a network protocol stack, based on the identification condition included in the secure processing information;
in a case where the plaintext multimedia packet is filtered, when the plaintext multimedia packet matches the identification condition included in the secure processing information, executing encrypt processing or authentication processing for the plaintext multimedia packet, and modifying a payload of a secure multimedia packet such that the payload of the secure multimedia packet is complied with the security protocol;
transferring the secure multimedia packet to be transmitted to the virtual network interface, to an original network interface; and
transmitting the secure multimedia packet from the original network interface.

2. A encrypt processing apparatus for improving encrypt and decrypting processing or authentication processing for multimedia communication secured by a security protocol, the encrypt processing apparatus comprising:
a storing section that stores secure processing information including an identification condition for identifying a packet required in the encrypt and decrypting processing or the authentication processing;
a transmitting section that transmits a plaintext multimedia packet to a virtual network interface;
a modification section that modifies a payload of a secure multimedia packet such that the payload of the secure multimedia packet complies with a security protocol by deciding whether or not the plaintext multimedia packet matches the identification condition included in the secure processing information and executing encrypt processing or authentication processing for the plaintext multimedia packet when the identification condition is matched;
a replacement section that transfers the secure multimedia packet to be transmitted to the virtual network interface, to an original network interface; and
a transmitting section that transmits the secure multimedia packet from a network interface.

3. A encrypt processing method for improving encrypt and decrypting processing or authentication processing for multimedia communication secured by a security protocol, the encrypt processing method comprising the steps of:
upon starting the multimedia communication, storing secure processing information including an identification condition for identifying a packet required in the encrypt and decrypting processing or the authentication processing;
filtering a secure multimedia packet inputted in a network protocol stack, based on the identification condition included in the secure processing information;
in a case where the secure multimedia packet is filtered, when the secure multimedia packet matches the identification condition included in the secure processing information, executing decrypting processing or authentication processing for the secure multimedia packet and modifying a payload of the secure multimedia packet as a plaintext payload; and
transmitting a plaintext multimedia packet to an application layer of the multimedia communication.

4. A encrypt processing apparatus for improving encrypt and decrypting processing or authentication processing for multimedia communication secured by a security protocol, the encrypt processing apparatus comprising:
a storing section that stores secure processing information including an identification condition for identifying a packet required in the encrypt and decrypting processing or the authentication processing;
a modification section for modifying a payload of a secure multimedia packet as a plaintext payload by deciding whether or not the secure multimedia packet inputted matches the identification condition included in the secure processing information and executing encrypt processing or authentication processing for the secure multimedia packet when the identification condition is matched; and
a transmitting section that transmits a plaintext multimedia packet to an application layer of the multimedia communication.
